**Europäisches Patentamt**

**European Patent Office**

**Office européen des brevets**

(19)

(11) Veröffentlichungsnummer: **0 131 820**
**B1**

(12) **EUROPÄISCHE PATENTSCHRIFT**

(45) Veröffentlichungstag der Patentschrift:
**18.01.89**

(51) Int. Cl.⁴: **F 25 B 37/00, B 01 D 53/18**

(21) Anmeldenummer: **84107549.2**

(22) Anmeldetag: **29.06.84**

(54) **Absorber.**

(30) Priorität: **16.07.83 DE 8320798 U**

(43) Veröffentlichungstag der Anmeldung:
**23.01.85 Patentblatt 85/4**

(45) Bekanntmachung des Hinweises auf die Patenterteilung:
**18.01.89 Patentblatt 89/3**

(84) Benannte Vertragsstaaten:
**AT BE CH DE FR GB IT LI LU NL SE**

(73) Patentinhaber: **Joh. Vaillant GmbH u. Co., Berghauser Strasse 40 Postfach 10 10 20, D-5630 Remscheid 1 (DE)**

(84) Benannte Vertragsstaaten: **DE IT LU SE**

(73) Patentinhaber: **COFRABEL N.V., 15, rue Golden Hope straat, B-1620 Drogenbos (BE)**

(84) Benannte Vertragsstaaten: **BE**

(56) Entgegenhaltungen:
DE-A- 3 111 575
DE-C- 242 515
FR-E- 92 859
GB-A- 1 322
GB-A- 2 051 606
US-A- 2 210 496
US-A- 3 795 388
US-A- 4 223 539

**CHEMICAL ENGINEERING, Band 79, Nr.25, 13.November 1972, Seiten 120-127 F.A. ZENZ: Designing Gas-Absorption**

(73) Patentinhaber: **VAILLANT S.A.R.L, 4, Rue des Oliviers Orly-Sénia 326, F-94537 Rungis Cedex (FR)**

(84) Benannte Vertragsstaaten: **FR**

(73) Patentinhaber: **VAILLANT Ges.m.b.H, Forchheimergasse 7 Postfach 56, A-1233 Wien (AT)**

(84) Benannte Vertragsstaaten: **AT**

(73) Patentinhaber: **Vaillant Ltd., Vaillant House Medway City Estate Trident Close, Rochester Kent ME2 4EZ (GB)**

(84) Benannte Vertragsstaaten: **GB**

(73) Patentinhaber: **SCHONEWELLE B.V., Ellermanstraat 17, NL-1099 BX Amsterdam (NL)**

(84) Benannte Vertragsstaaten: **NL**

(73) Patentinhaber: **Vaillant GmbH, Riedstrasse 8, CH-8953 Dietikon 1 (CH)**

(84) Benannte Vertragsstaaten: **CH LI**

(72) Erfinder: **Goebel, Peter, Am Kirschbaum 14, D-5632 Wermelskirchen (DE)**
Erfinder: **Diesing, Hartmuth, Akazienweg 5, D-5632 Wermelskirchen (DE)**

(74) Vertreter: **Helm, Johann-Ludwig, c/o Joh. Vaillant GmbH u. Co Postfach 10 10 20 Berghauser Strasse 40, D-5630 Remscheid 1 (DE)**

**Beschreibung**

Die vorliegende Erfindung bezieht sich auf einen Absorber für eine Absorptionswärmepumpe gemäss dem ersten Teil des unabhängigen Patentanspruchs.

Ein solcher Absorber ist bekanntgeworden aus der US-A-2 210 496. Hierbei tritt der Nachteil auf, dass an der Unterseite des ringförmigen Verteilgefässes Bohrungen vorhanden sind, aus denen die arme Lösung auf die Absorberschlange herabtropft. Hierbei ist es zum einen schwierig, mit hinreichender Genauigkeit relativ kleine Bohrungen zu fertigen, mittels derer ein dünner Rieselfilm erzeugt werden kann. Weiterhin ist es auch schwierig, die Bohrungen so anzubringen, dass die Absorberschlange jeweils am höchsten Teil der Peripherie der Absorberschlange betropft wird.

Der vorliegenden Erfindung liegt daher die Aufgabe zugrunde, Mittel vorzusehen, mit denen die arme Lösung der Wärmetauscher-Kühlschlange in fein verteilter Filmform angeboten werden kann und mit denen ein genaues Berieseln der Schlange möglich ist. Die Lösung der Aufgabe liegt in den kennzeichnenden Merkmalen des unabhängigen Patentanspruchs.

Weitere Ausgestaltungen und besonders vorteilhafte Weiterbildungen der Erfindung sind Gegenstand der Unteransprüche beziehungsweise gehen aus der nachfolgenden Beschreibung hervor, die ein Ausführungsbeispiel der Erfindung anhand der Figuren eins bis sechs der Zeichnung näher erläutert.

Es zeigen:

Figur eins eine Ansicht des Innenraums des oberen Teils eines Absorbergefässes im Querschnitt, Figur zwei und drei Ausführungsformen der Austrittsöffnungen aus dem Verteilergefäss im Querschnitt, Figur vier einen Schnitt durch die Oberfläche des Wärmetauscherrohrs, Figur fünf die Oberseite eines Wärmetauscherrohres in Ansicht und Figur sechs einen Schnitt mit einer teilweisen Innenansicht des Wärmetauscherrohres.

In allen sechs Figuren bedeuten gleiche Bezugszeichen jeweils die gleichen Einzelheiten.

In Figur eins ist ein Absorber 1 dargestellt, der aus einem Gefäss 2 besteht, das einen Innenraum 3 umschliesst und etwa zylindrische Gestalt hat, da es aus einem Mantelteil 4 und einem aufgesetzten stirnseitigen Boden beziehungsweise Deckel 5 besteht. Durch den Deckel ist an seiner höchsten Stelle ein Einlassstutzen 6 für eine arme Lösung führende Leitung vorgesehen, wobei der Stutzen 6 in den obersten Bereich 7 des Innenraums ragt. Der Stutzen 6 weist 4 sternförmig von einer mittleren Symmetrieachse des Absorbers ausgehende radiale Bohrungen 8 auf, an die Rohre 9 angeschlossen sind.

Über die Rohre 9 ist der Innenraum des Stutzens mit einem Innenraum 10 eines Ringrohres 11 verbunden, der im obersten Bereich 7 des Absorbers gelagert ist. Das Ringrohr 11 weist an seiner Unterseite 2 eine Vielzahl von Bohrungen 13 auf, durch die je ein Stift 14 ragt. Diese Stifte sind an der Oberseite 15 mit ihren Köpfen 16 abgeschweisst. Bei den Stiften handelt es sich bevorzugt um Nägel.

Wie die Figuren zwei und drei in vergrössertem Massstab zeigen, entsteht zwischen dem Aussenmantel des Stiftes und dem Innenmantel des Lochs 13 eine ringförmige Austrittsöffnung 17, über die der Innenraum 10 des Ringrohres 11 mit dem Innenraum 3 des Absorbergefässes 2 in Verbindung steht. Das Ringrohr 11 bildet somit ein Verteilergefäss, das nur über die Austrittsöffnung 17 und den Einlassstutzen 6 Verbindungen zu anderen Bereichen aufweist. Wie die Figuren zwei und drei zeigen, können die Stifte 14 unterschiedliche Querschnitte aufweisen. So ist gemäss Figur zwei der Stift 14 als Nagel ausgestaltet, dessen Kopf mit der Oberseite 15 des Ringrohres 11 verschweisst ist. Da das Loch rund ausgebildet ist, ergibt sich ein Kreisringquerschnitt für die Austrittsöffnung 17.

Gemäss Figur drei ist der Stift 14 hingegen dreikantförmig ausgebildet, so dass sich drei Kreiszweiecke für die Austrittsöffnung als Form ergeben. Hierbei findet eine Führung des Stiftes 14 entlang seiner Kanten am Innenmantel des Lochs 13 statt.

Wesentlich für die erzielbare Filmdicke ist auch noch die Oberfläche des Wärmetauschers 18, der als Rohrschlange geformt, unterhalb des Ringrohres angeordnet ist. Dieser Wärmetauscher ist mit einem Fluid gefüllt, das einen Verbraucher speist und im Absorber aufgeheizt werden soll, ihm also Wärme entzieht.

Der Wärmetauscher 18 besteht aus einem schraubenförmig aufgewundenen Rohr, wobei der Durchmesser der Rohrwindungen exakt dem des Ringrohres 11 entspricht.

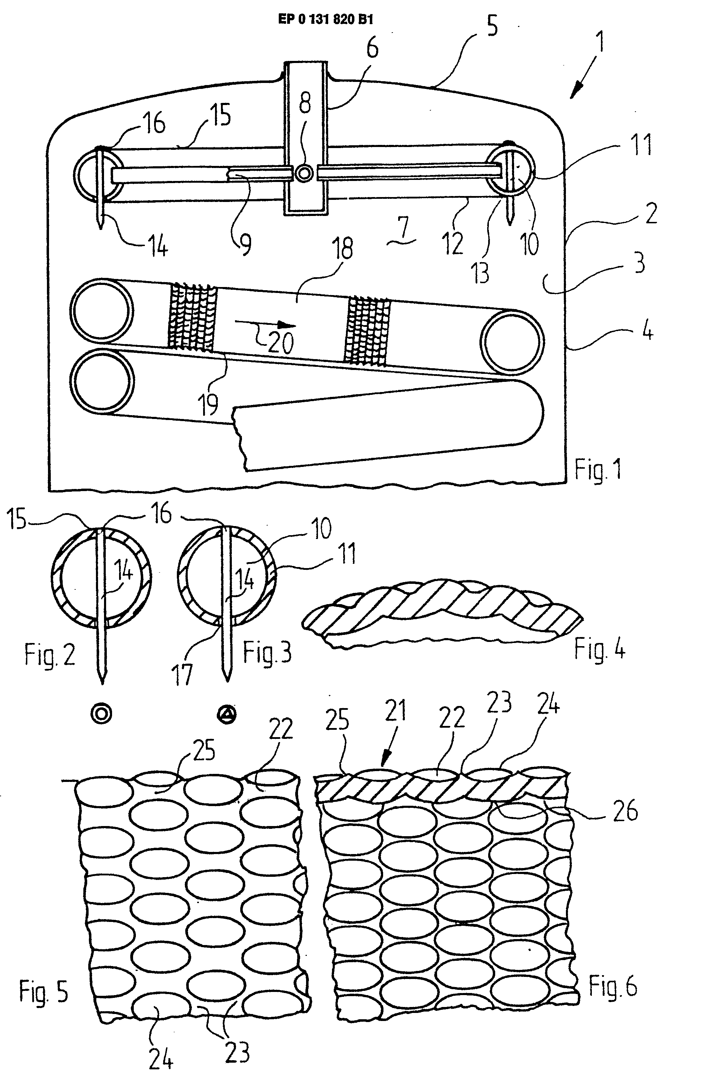

Die einzelnen Rohrverbindungen des Wärmetauschers stehen in einem axialen Abstand 19. Die Oberfläche des Wärmetauschers 18 weist eine spezielle Profilierung auf, die der Oberflächenvergrösserung dient und so ausgestaltet ist, dass in Richtung der Achse 20 des Rohres, also vor dem Verformen in Schraubenform, eine Rille 21 schraubenförmig unmittelbar aneinander anschliessend, in die Oberfläche des Rohres eingebracht wird. Somit ergibt sich eine Rillenvertiefung 22 beziehungsweise eine Erhebung 23 zwischen den Rillen. Im Bereich der Vertiefung 22 der Rille 21 sind dann tonnenförmige Erhebungen 24 eingedrückt, die nach aussen vorstehen. Diese tonnenförmigen Erhebungen 24 stehen isoliert und sind jeweils von einer Art Graben umgeben. Hierdurch wird eine Kanalisierung der über die Oberfläche der Wärmetauscherrohrschlange fliessenden Flüssigkeit erreicht. Nicht nur die Aussenseite 25 der Wärmetauscherrohrschlange ist so profiliert, auch die Innenseite 26, wie Figur 6 ausweist. Der Absorber weist weiterhin einen Einlass für Kältemitteldampf und an seiner Unterseite einen Auslass für reiche Lösung auf.

Die Funktion des beschriebenen Absorbers ist folgende:

Während des Betriebs der Wärmepumpe wird über den Stutzen 6 arme Lösung zugeführt. Die arme Lösung gelangt vom Innenraum des Stutzens 6 über die Vielzahl parallel geschalteter Rohre 9 gleichmässig in den Innenraum 10 des Ringraums, und zwar über den gesamten Umfang. Die arme Lösung tritt an der Unterseite 12 des Ringrohrs 11 über die Vielzahl gleichfalls hydraulisch parallel geschalteter Austrittsöffnungen 17 aus, fliesst an den sich unterhalb der Unterseite 12 des Ringrohres 11 fortsetzenden unteren Enden der Stifte 14 entlang, bis zu deren spitzen Enden, von wo die Lösung abtropft und auf die Oberseite der höchsten Rohrwindung des Wärmetauschers 18 tropft. Hier gelangt die arme Lösung auf die speziell profilierte Oberfläche des Wärmetauscherrohres, wird hier fein verteilt und durch den im Innenraum des Rohres fliessenden Verbraucher gekühlt. Hierbei kann sie erhebliche Mengen von Kältemitteldampf aufnehmen, der durch das nicht dargestellte Rohr dem Innenraum 3 des Gefässes 2 zugeleitet wird. Die sich zunehmend mit Kältemittel anreichernde Lösung tropft von Rohrwindung zu Rohrwindung in untere Bereiche des Absorbergefässes 2 und wird schliesslich im Sumpf des Absorbers gesammelt und abgeführt.

## Patentansprüche

1. Absorber für eine Sorptionswärmepumpe mit einem am oberen Ende des Absorbergefässes angeordneten Einlass für arme Lösung, einem Wärmetauscherelement eines Verbrauchers und einem im Bereich der Oberseite des Absorbers vorgesehenen Verteilgefäss, das an seiner Unterseite Austrittsöffnungen zum Berieseln des Wärmetauschers mit der armen Lösung aufweist und bis auf die Austrittsöffnungen (17) und den Einlass (6/9) geschlossen ist, dadurch gekennzeichnet, dass in die Austrittsöffnungen (13) Stifte (14) ragen, wobei um die Stifte (14) herum Restquerschnittsöffnungen (17) verbleiben, und dass die Stifte (14) sich von oben durch die Austrittsöffnungen (13) hindurcherstrecken und spitze Enden aufweisen, die unterhalb der Unterseite (12) des Verteilgefässes (11) angeordnet sind.

2. Absorber nach Anspruch eins, dadurch gekennzeichnet, dass die Oberfläche der Rohrschlange (18) eine schraubenförmige Rille (21) aufweist, deren Windungen unmittelbar aneinanderliegen, wobei die Rille voneinander im Abstand stehende Auswölbungen (24) aufweist.

3. Absorber nach Anspruch eins, dadurch gekennzeichnet, dass das Verteilgefäss als Ringrohr (11) ausgebildet und die Stifte an der Oberseite (15) des Ringrohres (11) befestigt sind und die Unterseite (12) des Ringrohres überragen.

4. Absorber nach Anspruch zwei, dadurch gekennzeichnet, dass die Stifte (14) als Nägel ausgebildet sind.

5. Absorber nach Anspruch drei, dadurch gekennzeichnet, dass die Stifte Kreisquerschnitt aufweisen.

6. Absorber nach Anspruch drei, dadurch gekennzeichnet, dass die Stifte einen Polygonquerschnitt aufweisen.

7. Absorber nach einem der Ansprüche eins bis sechs, dadurch gekennzeichnet, dass die Austrittsöffnungen (13) rund ausgestaltet sind.

8. Absorber nach Anspruch eins oder sechs, dadurch gekennzeichnet, dass die Zentrierung der Stifte (14) bei Polygonquerschnitt über ihre Kanten erfolgt.

9. Absorber nach einem der Ansprüche eins bis acht, dadurch gekennzeichnet, dass die Zufuhr der armen Lösung in den Innenraum (10) des Ringrohres (11) über sternförmig angeordnete Rohre (9) erfolgt.

## Claims

1. An absorber for a sorption heat pump comprising a weak solution inlet at the top end of the absorber vessel, a heat exchanger element of a consumer and a distributor vessel, which is disposed adjacent to the top of the absorber and on its underside has outlet openings for sprinkling the weak solution onto the heat exchanger and is closed with the exception of the outlet openings (17) and the inlet (6/9), characterized in that pins (14) extend into the outlet openings (13), residual cross-sectional openings (17) remain around the pins (14) and the pins (14) extend through the outlet openings (13) from above and have pointed ends, which are disposed below the underside (12) of the distributor vessel (11).

2. An absorber according to claim 1, characterized in that the surface of the pipe coil (18) has a helical groove (21), the convolutions of which closely adjoin each other, and the groove has spaced apart bulges (24).

3. An absorber according to claim 1, characterized in that the distributor vessel consists of an annular tube (11) and the pins are secured to the top (15) of the annular tube (11) and protrude from the underside (12) of the annular tube.

4. An absorber according to claim 2, characterized in that the pins (14) consist of nails.

5. An absorber according to claim 3, characterized in that the pins are circular in cross-section.

6. An absorber according to claim 3, characterized in that the pins are polygonal in cross-section.

7. An absorber according to any of claims 1 to 6, characterized in that the outlet openings (13) are round.

8. An absorber according to claim 1 or 6, characterized in that pins (14) which are polygonal in cross-section are centred at their edges.

9. An absorber according to any of claims 1 to 8, characterized in that the weak solution is supplied to the interior (10) of the annular tube (11) through tubes (9) arranged in a star-shaped configuration.

## Revendications

1. Absorbeur pour une thermopompe à sorption, avec une entrée de solution pauvre, disposée à l'extrémité supérieure du boîtier de l'absorbeur, un élément échangeur de chaleur d'un récepteur et d'un distributeur prévu au niveau de la face supérieure de l'absorbeur et muni, à sa face inférieure, d'orifices pour l'arrosage de l'échangeur de chaleur avec la solution pauvre, ledit distributeur étant fermé, exception faite des orifices de sortie (17) et de l'entrée (6/9), caractérisé par le fait que des pointes (14) pénètrent dans les orifices de sortie (13) en laissant autour d'elles des passages (17) et que lesdites pointes (14) pénètrent dans les orifices (13) d'en haut et sont munies d'extrémités pointues disposées sous la face inférieure (12) du distributeur (11).

2. Absorbeur suivant la revendication 1, caractérisé par le fait que la surface du serpentin (18) est munie d'une rigole hélicoïdale (21) dont les spires se touchent l'une l'autre, la rigole comportant des boucles (24) distancées entre elles.

3. Absorbeur suivant la revendication 1, caractérisé par le fait que le distributeur est conçu en forme de tube annulaire (11) à la face supérieure (15) duquel sont fixées les pointes qui en dépassent la face inférieure (12).

4. Absorbeur suivant la revendication 2, caractérisé par le fait que les pointes (14) ont la forme de clous.

5. Absorbeur suivant la revendication 3, caractérisé par le fait que les pointes ont une section circulaire.

6. Absorbeur suivant la revendication 3, caractérisé par le fait que les pointes ont une section polygonale.

7. Absorbeur suivant l'une des revendications 1 à 6, caractérisé par le fait que les orifices de sortie (13) ont une section circulaire.

8. Absorbeur suivant la revendication 1 ou 6, caractérisé par le fait que les pointes à section polygonale sont centrées à l'aide de leurs bords.

9. Absorbeur suivant l'une des revendications 1 à 8, caractérisé par le fait que l'alimentation en solution pauvre de l'intérieur (10) du tube annulaire (11) est assurée par des tubes (9) disposés en étoile.

Fig. 1

Fig. 2

Fig. 3

Fig. 4

Fig. 5

Fig. 6